# EUROPÄISCHE PATENTSCHRIFT

(11) **EP 2 895 921 B1**
(45) Veröffentlichungstag und Bekanntmachung des Hinweises auf die Patenterteilung: **30.10.2019**
(21) Anmeldenummer: 13759784.5
(22) Anmeldetag: 12.09.2013
(51) Int. Cl.: G03H 1/02, G03H 1/12, G03H 1/20, G03H 1/04, G03H 1/26

(54) **VERFAHREN ZUR HERSTELLUNG EINES VOLUMENREFLEXIONS-HOLOGRAMMS MIT VERBESSERTER MARKER-AUSBILDUNG**
METHOD FOR PRODUCING A VOLUME REFLECTION HOLOGRAM HAVING IMPROVED MARKER FORMATION
MÉTHODE DE CRÉATION D'UN HOLOGRAMME DE RÉFLEXION VOLUMIQUE À FORMATION DE REPÈRES AMÉLIORÉE

(30) Priorität: 12.09.2012 DE 102012216219
(43) Veröffentlichungstag der Anmeldung: 22.07.2015
(73) Patentinhaber: Bundesdruckerei GmbH, 10969 Berlin (DE)
(72) Erfinder: LEOPOLD, André, 10119 Berlin (DE); GAHLBECK, Jeffry, 15517 Fürstenwalde (DE); MÄRTENS, Detlef, 13599 Berlin (DE)
(74) Vertreter: Patentanwälte Bressel und Partner mbB
(86) Internationale Anmeldenummer: PCT/EP2013/068918
(87) Internationale Veröffentlichungsnummer: WO 2014/041079

(56) Entgegenhaltungen:
- EP-A2- 0 752 600
- EP-A2- 0 896 260
- US-A1- 2001 021 474
- US-A1- 2002 003 637
- US-A1- 2003 030 858
- US-A1- 2006 007 513

## Beschreibung

Die Erfindung betrifft ein Verfahren zur Herstellung individualisierter Volumenhologramme mit Passermarken.

Aus dem Stand der Technik sind individualisierte Volumenreflexionshologramme bekannt, die beispielsweise als Sicherheitselemente in Sicherheitsdokumenten verwendet werden. Seit einigen Jahren werden deutsche Pass- und Personalausweisdokumente beispielsweise mit einem Volumenreflexionshologramm versehen, in dem personalisierte Daten der Person gespeichert sind, für die das Sicherheitsdokument ausgestellt ist. Beispielsweise sind in einem solchen Volumenreflexionshologramm ein Gesichtsbild, ein Name und Vorname, ein Geburtsdatum und eine Dokumentnummer oder Ähnliches gespeichert.

Für die Herstellung eines solchen individualisierten Volumenreflexionshologramms wird ein Master verwendet, wie er beispielsweise in der EP 0 896 260 A2 beschrieben ist. Dort ist eine Vorrichtung zur Herstellung von Volumenhologrammen aus einem Masterhologramm einer Mattscheibe beschrieben, die mit einer oder mehreren Wellenlängen und einem oder mehreren Referenzwinkeln aufgenommen ist. Mit dem Masterhologramm der Mattscheibe können stereoskopische und farbige individuelle Hologramme im Kontaktkopierverfahren hergestellt werden. Die beschriebene Vorrichtung besitzt eine Strahlungsquelle für Laserstrahlung, zum Bestrahlen eines Masterhologramms und eines Films. Damit Hologramme die verschiedenen Informationen beinhalten, auf einfache Weise hergestellt werden können, ist eine Modulationseinrichtung, insbesondere ein Flüssigkristalldisplay (LCD) vorhanden, um die kohärente Laserstrahlung zu modulieren.

Aus der DE 198 02 586 A1 ist eine Schutzschicht für das Master zur Kontaktkopie von Hologrammen bekannt, wobei die Schutzschicht ein ausgehärteter transparenter UV-Lack oder ein kratzfester Lack auf Lösungsmittelbasis oder ein kratzfester Lack auf Basis von zwei Komponenten ist.

Die DE 10 2006 016 139 A1 beschreibt ein Verfahren zur Herstellung eines Mehrschichtkörpers, der ein Volumenhologramm mit mindestens zwei unterschiedlichen Bildinformation aufweist, wobei eine photosensitive Schicht des Mehrschichtkörpers unmittelbar oder unter Zwischenschaltung eines transparenten optischen Mediums in Kontakt mit der Vorderseite eines Masters gebracht wird, in die miteinander verschachtelte Bereiche mit unterschiedlichen asymmetrischen Oberflächenstrukturen oder Kinorform-Strukturen abgeformt sind, welche die mindestens zwei unterschiedlichen Bildinformationen verkörpern. Die photosensitive Schicht und der Master werden mit einem kohärenten Lichtstrahl belichtet, wodurch in der photosensitiven Schicht ein Volumenhologramm ausgebildet wird. Weiter wird ein Master zur Herstellung des Mehrschichtkörpers beschrieben sowie ein Sicherheitselement mit des besagten Mehrschichtkörper.

Aus der EP 0 892 362 A2 ist ein Datenträger, insbesondere Ausweiskarte, Wertpapier oder dergleichen mit einem mehrschichtigen, optisch variablen Element bekannt, welches Beugungsstrukturen aufweist, die eine visuell erkennbare Information darstellen. Im Bereich einer der Schichten des optisch variablen Elements und/oder einer direkt angrenzenden Schicht des Datenträgers liegt zumindest partiell wenigstens eine vorbestimmte irreversible Veränderung vor, die visuell und/oder maschinell lesbar ist.

Aus der DE 10 2005 029 853 A1 ist eine Vorrichtung zur Herstellung eines Reflexionshologramms bekannt, die ein Masterhologramm, welches zumindest eine farbsensitive, reflektierende Schicht umfasst, einen auf das Masterhologramm aufgebrachten photosensitiven Film sowie einen auf dem Film angeordneten Filter, durch welchen Licht auf das Masterhologramm geleitet und zu dem Film reflektiert wird, sowie eine Laserlichtquelle umfasst, welche weißes oder monochromatisches Licht abgibt.

Um das hergestellte individualisierte Volumenreflexionshologramm nach dessen Herstellung mit anderen Folien und/oder Sicherheitselementen zusammenzufügen, die dann zu einem Dokumentkörper vereint werden, ist es notwendig, das erzeugte Volumenreflexionshologramm relativ zu den anderen Bestandteilen des Sicherheitsdokuments zu positionieren. Beispielsweise ist es wünschenswert, das Volumenhologramm relativ zu auf eine Folie aufgedruckten Informationen auszurichten. Um dies maschinell ausführen zu können, werden in ein solches individualisiertes Volumenreflexionshologramm Passermarken mit einbelichtet, welche durch eine Rekonstruktion dieser im Hologramm ausgebildeten Passermarken maschinell bei der Positionierung ausgelesen werden können.

Aus der US 2002/0003637 A1 ist eine Passermarke für ein Hologramm und ein Herstellungsverfahren für eine Passermarke für ein Hologramm bekannt. Insbesondere beschreibt die D3 eine Passermarke, die sich an einer bestimmten Position auf der Hologrammoberfläche befindet und beim Kopieren des Hologrammes hergestellt wird. Dabei wird die Passermarke auf demselben Substrat bereitgestellt, auf dem sich auch ein Reflexionshologramm mit einer vorbestimmten Form befindet.

Bei dem aus dem Stand der Technik bekannten Verfahren findet die Einbelichtung der Passermarken gemeinsam mit dem Einbringen der individualisierenden Informationen statt. Ein Teil des zum Belichten des Volumenreflexionshologramms verwendeten Lichts wird räumlich in der Weise moduliert, dass diesem die räumliche Struktur einer Passermarke aufgeprägt wird. Die Passermarke ist somit in allen Volumenhologrammen räumlich präzise relativ zu den individualisierenden Informationen positioniert, da diese im selben Modulationsschritt bzw. mit derselben räumlichen Modulationsvorrichtung erzeugt werden. Die Passermarken werden lediglich in einem Bereich des Volumenreflexionshologramms ausgebildet, der "außerhalb" des herzustellenden Personaldokuments angeordnet ist. Die Passermarken sind somit als immer gleich bleibende "individuelle Informationen" in dem hergestellten Volumenreflexionshologramm ausgebildet.

In dem Bereich, in dem die individualisierenden Informationen und auch die Passermarken ausgebildet werden, umfasst der Master im Stand der Technik eine hier als Diffusbeugungsstruktur bezeichnete Beugungsstruktur, die im Stand der Technik als Volumenreflexionshologramm einer Mattscheibe ausgebildet ist. Diese beugt beispielsweise senkrecht auftreffendes Licht einer Wellenlänge so, dass dieses unter 45° zurückgeworfen wird. Die Einbelichtung der individualisierenden Informationen erfolgt unter einem sogenannten Referenz- oder Einstrahlwinkel, welcher bei der hier beschriebenen Ausführungsform nach dem Stand der Technik mit der Lotrechten des Masters übereinstimmt. Das zur Einbelichtung verwendete Licht interferiert mit dem unter 45° zurückgebeugten Licht. Alternativ könnte mit einem solchen Master eine Einbelichtung unter 45° gegenüber der Lotrechten des Masters erfolgen. In diesem Falle würde das gebeugte Licht parallel zur Lotrechten zurückgebeugt. Um eine Verifikation unter einer einfachen Geometrie zu ermöglichen, beugt die Beugungsstruktur des Masters das zur Einbelichtung verwendete Licht jeweils so, dass dieses nicht in die Lichtquelle zurückgebeugt wird.

Beim anschließenden Auswerten der Passermarke im weiteren Herstellungsprozess eines Sicherheitsdokuments ergeben sich Schwierigkeiten bei der exakten Erfassung der Passermarkenposition. Im Produktionsprozess wird der entwickelte holografische Film beispielsweise entlang einer Raumrichtung, welche in der Ebene des holografischen Films liegt, bewegt. Das Volumenreflexionshologramm wird zumindest im Bereich der Passermarken rekonstruiert und das durch die Passermarkenstruktur beugend reflektierte Licht beispielsweise mit einem lichtempfindlichen Detektor ausgewertet. Sobald das aus der Rekonstruktion der Passermarke stammende Licht eine bestimmte Intensitätsschwelle überschreitet, d.h. an dem lichtempfindlichen Detektor eine bestimmte Lichtintensität registriert wird, gilt die Passermarke als erfasst.

Das hergestellte Volumenreflexionshologramm weist mindestens eine Passermarke auf. Im Bereich der einbelichteten Passermarke besitzt diese die Eigenschaft des Bereichs des Masters, der beim Einbelichten rekonstruiert wird. Da der Master ein Volumenreflexionshologramm einer Mattscheibe ist, stellt die Passermarke einen Ausschnitt einer solchen Mattscheibe in der Form der Passermarke dar. Dies bedeutet, dass zur Rekonstruktion der Passermarke eines individualisierten Volumenreflexionshologramms verwendetes Licht im Bereich der Passermarkenkontur diffus reflektierend gebeugt wird. Gebündelte parallele Strahlen werden an der Passermarke gebeugt und als divergierende Strahlen zurückgestrahlt. Eine maximale Intensität wird im Zentrum des divergierenden Strahls erreicht. Zum Rand hin nimmt die Intensität des rückgestrahlten Lichts ab. Diese Intensitätsverteilung zeigt sich auch, wenn auch abgeschwächt, wenn der Master nicht das Hologramm eines diffus streuenden oder diffus reflektierenden Objekts ist.

Da holografisches Aufzeichnungsmaterial hinsichtlich der Beugungseffizienz eines einbelichteten Volumenreflexionshologramms deutliche Streuungen aufweist, führt dies bei gleichbleibender räumlicher Profilform des rekonstruierten Lichts zu leicht unterschiedlichen Positionen, an denen die Passermarke registriert wird. Je größer die Beugungseffizienz ist, desto früher wird die Passermarke als erkannt registriert. Noch gravierender sind die Einflüsse, die von der beim Entwickeln des holografischen Films auftretenden Schrumpfung herrühren. Auch diese unterliegt einer gewissen Variation. Da bei der Einbelichtung des Hologramms das eingestrahlte Licht und das an dem Master gebeugte Licht unter einem von 0° (180°) verschiedenen Winkel, beispielsweise unter 45° (315°), interferieren, variiert auch eine Ausfallsrichtung des Rekonstruktionslichts bei gleichbleibender Wellenlänge des Rekonstruktionslichts. Da bei einer Mattscheibe ferner, wie erwähnt, die in unterschiedliche Raumrichtungen "reflektierte" Intensität zusätzlich differiert, führt dies im Endeffekt ebenfalls dazu, dass abhängig von der eintretenden Schrumpfung bei der Entwicklung des holografischen Films die Ausfallsrichtung des rekonstruierten Lichts deutlich variiert. Mit der Schwankung der Ausfallsrichtung variiert auch die Position, an der das rekonstruierte Licht relativ zu der tatsächlichen Passermarkenposition eine Intensität erreicht, die als Erkennen der Passermarke definiert ist.

Um eine präzisere Positionierung der hergestellten, individuellen, Volumenreflexionshologramme zu ermöglichen, ist es daher notwendig, ein verbessertes Verfahren zum Herstellen individualisierter Volumenreflexionshologramme, einen verbesserten Master für deren Herstellung sowie ein neues Verfahren zur Herstellung eines solchen Masters anzugeben.

Der Erfindung liegt somit die Aufgabe zugrunde, die im Stand der Technik genannten Nachteile zu beseitigen.

Der Erfindung liegt die Idee zugrunde, die Streuung des Lichts hinsichtlich Intensität und Richtung dadurch zu minimieren, dass der Master in dem Bereich, der zum Ausbilden mindestens einer Passermarke belichtet wird, mit einem Reflexionselement versehen wird, welches zumindest das zur Belichtung der Passermarke verwendete Licht spiegelnd reflektiert. Spiegelnd reflektiert bedeutet hier, dass das Reflexionselement gemäß den Gesetzen der geometrischen Optik wie ein Spiegel reflektiert, das heißt der Einfallswinkel ist gleich dem Ausfallswinkel relativ zur Oberfläche des Reflexionselements.

Insbesondere wird somit ein Master für die Herstellung eines Volumenreflexionshologramms mit einem individualisierbaren Bereich genutzt, welcher umfasst: einen Träger, mindestens eine Ablenkungsstruktur, welche auf dem Träger angeordnet ist oder in diesem ausgebildet ist und den Nutzbereich bedeckt, wobei die mindestens eine Ablenkungsstruktur kohärentes Licht einer Wellenlänge, das aus einer vorgegebenen Einfallsrichtung auf die Ablenkungsstruktur auftrifft, in eine vorgegebene, zu der Einfallrichtung nicht kollineare Ausfallsrichtung zurückstrahlt, wobei in einer Rückstrahlebene, welche von der Einfallsrichtung und der Ausfallrichtung aufgespannt wird, ein Winkel der Einfallsrichtung zu einer Oberflächennormale einer makroskopischen Oberfläche des Masters lokal an einem Auftreffort des kohärenten Lichts von einem Winkel der Ausfallrichtung gegen diese Oberflächennormale abweicht, wobei der Master zusätzlich ein Reflexionselement umfasst, das gerichtetes Licht gemäß der geometrischen Optik spiegeln reflektiert. Es wird ein Verfahren zum Herstellen eines individualisierten Volumenhologramms geschaffen, welches die Schritte umfasst: Bereitstellen eines Masters, wie oben angegeben, Bereitstellen eines holografischen Films und Anordnen des Films vor dem Master, Erzeugen von kohärentem Licht, Richten des kohärenten Lichts durch den holografischen Film auf den Master, so dass von der Ablenkungsstruktur des Masters das in den holografischen Film zurückgestrahlt wird, wobei einem Teil des Lichts die Form einer Passermarke aufgeprägt wird und dieses Licht, dem die Passermarke räumlich aufgeprägt ist, durch den holografischen Film so auf den Master gelenkt wird, dass dieser Teil auf ein Reflexionselement des Masters trifft, das das Licht gemäß der geometrischen Optik spiegelnd reflektiert.

Ein Verfahren zum Herstellen eines Masters für die Produktion individualisierter Volumenreflexionshologramme umfasst die Schritte: Bereitstellen eines Trägers; Herstellen oder Bereitstellen einer Beugungsstruktur, welche kohärentes Licht einer Wellenlänge, das aus einer vorgegebenen Einfallsrichtung auf die Ablenkungsstruktur auftrifft, in eine vorgegebene, zu der Einfallrichtung nicht kollineare Ausfallrichtung zurückstrahlt; wobei in einer Rückstrahlebene, welche von der Einfallsrichtung und der Ausfallrichtung aufgespannt wird, ein Winkel der Einfallsrichtung zu einer Oberflächennormale einer makroskopischen Oberfläche des Masters lokal an einem Auftreffort des kohärenten Lichts von einem Winkel der Ausfallrichtung gegen diese Oberflächennormale abweicht, Aufbringen der Ablenkungsstruktur auf den Träger; wobei zusätzlich ein Reflexionselement aufgebracht wird, das Licht gemäß den Gesetzen der geometrischen Optik spiegelnd reflektiert. Durch das Ausbilden eines Reflexionselements, welches gemäß den Gesetzen der geometrischen Optik spiegelnd reflektiert, stellt dieses also für das Licht mindestens einer Wellenlänge einen Spiegel dar.

Der Vorteil der Erfindung liegt darin, dass die von der Ablenkungsstruktur herrührende unvermeidliche Aufweitung des Rekonstruktionslichtkegels bei der Rekonstruktion der Passermarke unterbleibt oder zumindest deutlich reduziert wird. Ein Lichtstrahl des zurückgeworfenen Rekonstruktionslichts ist somit besser lokalisiert. Ferner wird an dem Reflexionselement fast die gesamte Intensität des zum Belichten verwendeten Lichts reflektiert. Die auftretenden Beugungseffizienzschwankungen im Bereich der Passermarke des hergestellten individualisierten Volumenreflexionshologramms werden so reduziert.

Als makroskopische Oberfläche wird die Oberfläche eines Gegenstands angesehen, die makroskopisch von einem Körper wahrgenommen wird. Weist die Oberfläche in Wirklichkeit eine mikroskopische Struktur auf, so wird über diese gemittelt. Bei einem flachen ebenen Gegenstand, der eine mikroskopisch strukturierte Oberfläche aufweist, ist die makroskopische Oberfläche durch eine Ebene gegeben, welche parrallel zu der Ebene entlang derer sich der flache ebene Gegenstand sich erstreckt. Bei einem flachen Spiegel mit einer sägezahnartigen Oberflächenstruktur, wie sie beispielsweise in der DE202007006796U1 beschrieben ist, ist die makroskopische Oberfläche durch eine tangential an der Vorderseite des Spiegels anliegende Ebene gegeben. Bei einem zylindrischen Körper mit mikrostrukturierter Oberfläche ist die makroskopische Oberfläche lokal jeweils durch eine Tangentialebene zu dem Zylinder die lokal an der Oberfläche anliegt gegeben.

Eine Ablenkungsstruktur kann insbesondere als Beugungsstruktur ausgebildet sein. Bevorzugt kann es sich um ein Volumenreflexionshologramm handeln.

Eine Ablenkungsstruktur kann gemäß einer Ausführungsform auch aus mikroskopischen reflektierenden Flächen bestehen, deren Oberflächennormale im Bereich eines bestimmten Winkels alle kollinear sind und gegenüber einer Oberflächennormale der makroskopischen Oberfläche des Masters geneigt sind. Die Oberfläche des Masters weist somit bei dieser Ausführungsform eine Mikrostruktur auf, deren Oberflächennormalen von einer Oberflächennormale einer makroskopisch wahrgenommenen Oberfläche des Masters bzw. der Ablenkungsstruktur abweichen. Die reflektierenden Flächen weisen Abmessungen auf, die größer als die Wellenläge des zur späteren Herstellung der Volumenhologramme genutzten Lichts auf, so dass die so gestalteten Ablenkungsstrukturen keine Lichtbeugung oder nur als untergeordneten Nebeneffekt aufweist.

Als Diffusbeugungsstruktur wird eine Struktur bezeichnet, die ein Lichtbündel gerichteter zueinander parallel orientierter Lichtstrahlen in der Weise beugt, dass die gebeugten Lichtstrahlen ein divergierendes Lichtbündel bilden, in dem die einzelnen Lichtstrahlen leicht variierende Richtungen in einem Winkelbereich, welcher als Ausfallwinkelbereich bezeichnet wird, um eine mittlere Ausfallrichtung aufweisen. Ein gerichteter gebündelter Lichtstrahl wird somit in einen diffus aufgeweiteten Lichtstrahl gebeugt.

### Bevorzugte Ausführungsformen

Erfindungsgemäß ist vorgesehen, den Nutzbereich oder einen Teil hiervon individualisiert zu kopieren. Dieses bedeutet, dass einzelne Bereiche oder Bildpunkte des Nutzbereichs mit unterschiedlicher Intensität des kohärenten Laserlichts beleuchtet werden. Über die Fläche des Nutzbereichs oder des kopierten Teils hiervon wird räumlich betrachtet die Intensität des kohärenten Lichts variiert. Wird das auftreffende Licht durch die Ablenkungsstruktur an allen Orten gleich zurückgeworfen, so wie dieses beispielsweise ein Volumenreflexionshologramm einer Streuscheibe oder Mattscheibe tut, so kann eine kopierte Fläche über die räumliche Modulation des kohärenten Lichts bezüglich der Intensität als hell-dunkel Muster oder "Graustufenmuster" gemäß der räumlichen Modulation kopiert und in das Hologramm, dass mittels des Masters erstellt wird, einbelichtet werden.

Bei dem erfindungsgemäßen Verfahren zur Herstellung von Volumenreflexionshologrammen ist daher vorgesehen, dass das Verfahren zusätzlich die Schritte umfasst: Empfangen von Individualisierungsdaten; und Modulieren des kohärenten Lichts entsprechend der Individualisierungsdaten mittels eines räumlichen Lichtmodulators. So lassen sich auf einfache Weise individualisierte Volumenreflexionshologramme erzeugen. Auch andere Ablenkungsstrukturen können auf diese Weise individualisiert kopiert werden.

Erfindungsgemäß erzeugt das Modulieren des kohärenten Lichts mittels des räumlichen Lichtmodulators den einen Teil und den weiteren Teil des kohärenten Lichts. Ein räumlicher Lichtmodulator, der als LCD-Schirm, als LCoS- (Liquid Crystal on Silicon) Modulator oder DMD- (Digital Mirror Device) Modulator ausgebildet sein kann, wird somit zur Individualisierung und zum Aufprägen der Passermarke genutzt. Hierdurch ist die Passermarke räumlich definiert exakt zu den individualisierten Strukturen des Nutzbereiches festgelegt. Passermarken und kopierter Inhalt des Nutzbereiches weisen zueinander keine Positionsschwankung aufgrund der Lichtmodulation auf. Eine mögliche Fehlerquelle wird ausgeschlossen.

Gemäß der Erfindung wird der Teil des Lichts, dem die Form der Passermarke aufgeprägt ist, senkrecht auf den Film und den Master geführt und an diesem so reflektiert, dass dieses Licht gegenläufig durch das holografische Filmmaterial zurückläuft. Hierdurch wird in dem Volumenreflexionshologramm quasi das Hologramm eines Spiegels in der Form der räumlichen Modulation der Passermarke einbelichtet. Hierfür ist der Master mit dem Reflexionselement ausgebildet, welches Licht zumindest einer Wellenlänge gemäß den Gesetzen der geometrischen Optik spiegelnd reflektiert.

Die Interferenzstrukturen einer mittels senkrecht auf den Master auftreffenden Lichts einbelichteten Passermarke bilden Ebenen, welche parallel zur Oberfläche des holografischen Films bzw. parallel zur Oberfläche des Masters ausgerichtet sind. Eine Schrumpfung während des Entwicklungsprozesses kann somit allerhöchstens zu einer Wellenlängenverschiebung hinsichtlich des Lichts führen, welches reflektierend durch die einbelichtete Passermarke zurückgeworfen wird. Es findet jedoch keine Änderung und somit keine Schwankung hinsichtlich der Richtung statt, unter der das Licht bei der Rekonstruktion zurückgeworfen wird.

Der Vorteil einer solchen Ausführungsform liegt darin, dass bei der Rekonstruktion der Passermarke das Rekonstruktionslicht jeweils unter ein und derselben vorgegebenen Richtung unabhängig von Variationen der Schrumpfung rekonstruiert wird. Somit ist eine genauere Positionierung des erzeugten Volumenreflexionshologramms möglich, da die Position der Passermarke anhand des Rekonstruktionslichts genauer erfasst werden kann.

Bei einer bevorzugten Ausführungsform ist die Beugungsstruktur für den Individualisierungsbereich als Diffusbeugungsstruktur ausgebildet, die das kohärente Licht einer Wellenlänge, das aus der vorgegebenen Einfallsrichtung auf die Beugungsstruktur auftrifft, in einen Ausfallwinkelbereich um die vorgegebene, zu der Einfallrichtung nicht kollineare Ausfallsrichtung zurückstrahlt. Die diffuse Aufweitung erweitert den Winkelbereich, unter dem bei einer Verifikation eine Rekonstruktion des hergestellten Volumenreflexionshologramms möglich ist. Die Anforderungen an die einzuhaltende Rekonstruktionsgeometrie werden abgesenkt. Ferner können großflächige Volumenreflexionshologramme aus geringerer Entfernung bei der Rekonstruktion vollständig von einer Erfassungsposition aus und ohne eine Änderung der Rekonstruktionsgeometrie (welche beispielsweise über ein Verkippen des Volumenreflexionshologramms im Raum herbeigeführt werden könnte) erfasst werden. Bevorzugt ist die Diffusbeugungsstruktur als Volumenreflexionshologramm einer Mattscheibe in einer Schicht ausgebildet. Diese Diffusbeugungsstruktur kann beispielsweise in der Weise hergestellt werden, wie dies in dem oben bereits genannten Druckschrift des Standes der Technik, der EP 0 896 260 A2, beschrieben ist, deren Offenbarungsgehalt hier vollumfänglich mit übernommen wird. Hierbei wird zunächst ein Transmissionshologramm der Mattscheibe angefertigt. Dieses wird dann rekonstruiert und das reelle Bild verwendet, um dieses als Volumenreflexionshologramm aufzunehmen. Dieses Volumenreflexionshologramm kann dann als Diffusbeugungsstruktur verwendet werden.

Bei einer Weiterbildung der Erfindung können ein oder mehrere weitere Beugungsstrukturen auf dem Träger angeordnet oder in dem Träger ausgebildet sein. Diese sind vorzugsweise ebenfalls als Volumenhologramme ausgebildet oder können auch als beliebige andere beugende Strukturen ausgebildet sein, welche Licht beugen und "zurückreflektieren".

Da eine Mehrfachbelichtung von unterschiedlichen Ablenkungsstrukturen (z.B. Beugungsstrukturen) in eine Materialschicht zum Teil unmöglich oder sehr aufwändig ist, ist bei einer Ausführungsform vorgesehen, dass die eine oder die mehreren weiteren Ablenkungsstrukturen (z.B. Beugungsstrukturen) in unterschiedlichen Schichten ausgebildet sind, die übereinander auf dem Träger angeordnet sind oder werden. Es versteht sich, dass diese Schichten zumindest in den Bereichen, in denen in darunterliegenden Schichten Ablenkungsstrukturen (z.B. Beugungsstrukturen) angeordnet sind, für Licht transparent ausgebildet sein müssen. Es sind jedoch auch Ausführungsformen möglich, bei denen alle Ablenkungsstrukturen (z.B. Beugungsstrukturen) in einer Schicht ausgebildet werden oder sind.

Das Reflexionselement, welches für die Ausbildung der Passermarke verwendet wird, wird bei einer bevorzugten Ausführungsform in Form einer Metallschicht aufgedampft. Dieses erfolgt entweder direkt auf den Träger des Masters, welcher vorzugsweise aus Glas gefertigt ist, oder auf eine der auf dem Träger angeordneten Substratschichten. Vorzugsweise erfolgt das Aufdampfen auf die oberste Substratschicht. Auf diese Weise wird das für die Ausbildung der Passermarke an dem Master spiegelnd reflektierte Licht nicht durch das Material der übrigen Schichten, in welchen die einzelnen Ablenkungsstrukturen ausgebildet sind, beeinflusst, da das Licht diese Materialschichten nicht passiert. Um einen Schutz gegen Abrieb oder Beschädigung zu schaffen, wird das Reflexionselement jedoch vorzugsweise an einer dem Träger zugewandten Seite der obersten Substratschicht angeordnet. Diese oberste Substratschicht ist vorzugsweise als eine Anti-Newton-Schicht ausgebildet.

Bei einer bevorzugten Ausführungsform des Verfahrens zur Herstellung eines individualisierten Volumenhologramms wird der Film beim Anordnen zumindest lokal parallel zu einer Oberfläche des Masters ausgerichtet. Dies bedeutet, dass die Oberfläche des Masters und des Films zumindest in dem Bereich, in dem die Belichtung stattfindet, zueinander parallel orientiert sind. Ist der Master beispielsweise auf einer Walze angeordnet und findet die Belichtung streifenweise statt, wobei das Licht innerhalb des Streifens räumlich anhand der individuellen Informationen bzw. gemäß der Vorgaben der Passermarke räumlich moduliert ist, so muss das Filmmaterial nur im Bereich dieser Belichtungslinie parallel zur Tangentialebene des walzenförmigen Masters orientiert sein. Bevorzugt werden jedoch plane Master, vor denen das holografische Filmmaterial parallel, vorzugsweise anliegend, angeordnet wird. Ein Anliegen des Filmmaterials bietet den Vorteil, dass in dem Filmmaterial während der Belichtung eine Bewegung z.B. aufgrund von Schwingungen oder Vibrationen des Filmmaterials unterdrückt ist.

Bei einer Ausführungsform weichen sowohl die vorfestgelegte vorgegebene Einfallsrichtung als auch die vorgegebene bzw. festgelegte Ausfallrichtung für die Diffusbeugungsstruktur bezogen auf den Träger von der Oberflächennormale des Trägers, ab, so dass der Teil des räumlich modulierten Lichts, dem die individuellen Informationen aufgeprägt sind, unter der vorfestgelegten Einfallsrichtung eingestrahlt wird, die von einer Einstrahlung parallel der Oberflächennormale des Trägers abweicht. Dies bedeutet, dass bei einer Ausführungsform der Bestandteil des Lichts, dessen räumliche Modulation die individualisierenden Daten kodiert, schräg auf den holografischen Film und den Master auftrifft. Der Teil des Lichts, der räumlich gemäß der Passermarkenform moduliert ist, wird hingegen über eine Strahlführungsoptik abweichend so geführt, dass dieser Teil des räumlich modulierten Lichts senkrecht auf das holografische Aufzeichnungsmaterial, d.h. den holografischen Film und den darunter befindlichen Master, und insbesondere das Reflexionselement auftrifft. Dieses wird, wie oben bereits erwähnt, bei einer bevorzugten Ausführungsform als Metallschicht auf den Träger oder eine oberste auf den Träger aufgebrachte Schicht aufgedampft. Hierfür eignen sich Metalle wie Aluminium, Silber, Gold, Kupfer oder andere Metalle oder Legierungen, welche eine spiegelnde Oberfläche ausbilden.

Das Reflexionselement ist vorzugsweise dünn und glatt ausgebildet. Eine Oberflächennormale fällt vorzugsweise mit der Oberflächennormale des Masters zusammen.

Bei alternativen Ausführungsformen kann vorgesehen sein, dass eine Metallfolie auf den Träger oder eine oberste der hierauf aufgebrachten Schicht aufgebracht wird. Bei einer Ausführungsform erfolgt ein Aufbringen des Reflexionselements unmittelbar auf den Träger. Da dessen Oberfläche hochpräzise gefertigt werden kann, ist hierdurch das Reflexionselement unabhängig von möglichen Materialunebenheiten, welche aus den Materialunebenheiten der einzelnen Schichten oder dem Zusammenfügen der unterschiedlichen Schichten auf dem Träger herrühren können.

Aufgrund der Invarianz der Maxwellgleichungen, die die Ausbreitung von Licht beschreiben, gegenüber einer Zeitumkehrung, können die vorgegebene Einfallsrichtung und die vorgegebene Ausfallsrichtung einer Beugungsstruktur des Masters vertauscht werden. Eine Einstrahlung von Licht zur Einbelichtung kann somit auch entlang der vorgegebenen "Ausfallrichtung" des Masters erfolgen, der das Licht dann so beugt, dass Dieses entlang der "Einfallsrichtung" zurückgebeugt wird. Umfasst der Master beispielsweise in dem für die Individualisierung vorgesehenen Bereich eine Diffusbeugungsstruktur, deren (Soll)-Einstrahlrichtung mit der Lotrechten des Trägers des Masters zusammenfällt und deren (Soll)-Ausfallrichtung einen 45°-Winkel bezüglich der Lotrechten des Trägers des Masters aufweist, so kann die Einbelichtung unter 45° zur Lotrechten des Trägers des Masters oder entlang dieser Lotrechten erfolgen. Hierbei wird die zweite Variante bevorzugt, da in diesem Fall das zur Einbelichtung der Passermarke räumlich modulierte Licht nicht über eine Ablenkungsoptik geführt werden muss, um senkrecht auf das Reflexionselement des Masters aufzutreffen und in sich zurück reflektiert zu werden, welches zu einer optimalen Ausbildung der Passermarke in dem herzustellenden Volumenreflexionshologramm führt.

Nachfolgend wird die Erfindung anhand bevorzugter Ausführungsbeispiele unter Bezugnahme auf eine Zeichnung näher erläutert. Hierbei zeigen:
- Fig. 1a und 1b: schematisch ein Verfahren zum Herstellen einer Diffusbeugungsstruktur nach dem Stand der Technik;
- Fig. 1c: eine schematische Darstellung zur Erläuterung der Herstellung eines individualisierten Volumenreflexionshologramms nach dem Stand der Technik;
- Fig. 2: eine schematische Darstellung der Interferenzebenen in einem Volumenreflexionshologramm nach dem Stand der Technik und zur Erläuterung von deren Einfluss auf eine Detektion eine Passermarke;
- Fig. 3: eine schematische Darstellung, in der unterschiedliche Signalkurven, die mittels eines lichtempfindlichen Detektors bei einer Passermarkenerfassung registriert werden, dargestellt sind;
- Fig. 4: eine schematische Schnittdarstellung durch einen Master;
- Fig. 5: eine schematische Darstellung einer Vorrichtung zur Herstellung individualisierter Volumenreflexionshologramme, und
- Fig. 6: eine schematische Darstellung einer zweiten Vorrichtung zur Herstellung individualisierter Volumenreflexionshologramme.

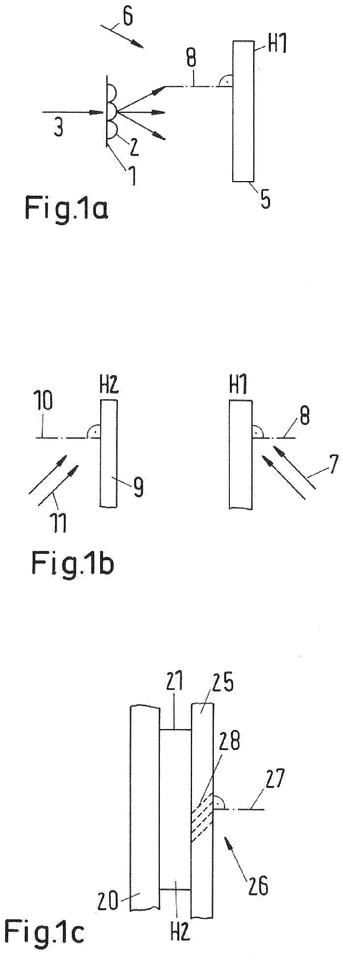

Anhand von Fig. 1a und 1b soll schematisch erläutert werden, wie eine Diffusbeugungsstruktur gemäß dem Stand der Technik herstellbar ist. Diese Diffusbeugungsstruktur kann als Ablenkungsstruktur gewertet werden. Eine Mattscheibe 1, welche beispielsweise regelmäßig angeordnete mikroskopische Linsen 2 umfasst, wird mit einem Objektstrahl 3 beleuchtet. Der gerichtete Objektstrahl 3 wird beim Durchtritt durch die Mattscheibe diffus gestreut. Das diffus aufgeweitete Licht 4 des Objektstrahls 3 trifft auf ein holografisches Aufzeichnungsmaterial 5 und wird dort mit einem zu dem Objektstrahl 3 kohärenten Referenzstrahl 6 überlagert. Der Referenzstrahl 6 weist beispielsweise gegenüber dem Objektstrahl 3 an der Oberfläche des holografischen Aufzeichnungsmaterials 5 bzw. gegenüber einer Oberflächennormalen 8 einen Winkel von 45° auf. Die sich in dem holografischen Aufzeichnungsmaterial 5 bildende Interferenzstruktur erzeugt ein Transmissionshologramm H1der Mattscheibe 1.

In einem zweiten Verfahrensschritt gemäß Fig. 1b wird das Transmissionshologramm H1 mit kohärentem Rekonstruktionslicht 7 in diesem Beispiel ebenfalls unter einem Winkel von 45° relativ zu einer Oberflächennormale 8 des Transmissionshologramms H1 beleuchtet, so dass ein reelles Bild der Mattscheibe 1 rekonstruiert wird. Am Ort der Rekonstruktion des reellen Bildes ist ein weiteres holografisches Aufzeichnungsmaterial 9 angeordnet und wird mit Referenzlicht 11, welches unter einem Winkel von beispielsweise 45° zu einer Oberflächennormale 10 des weiteren holografischen Aufzeichnungsmaterials 9 auftrifft, beleuchtet. Das Referenzlicht 11 ist kohärent zu dem Rekonstruktionslicht 7. Hierdurch bildet sich in dem weiteren holografischen Aufzeichnungsmaterial eine Interferenzstruktur, welche ein Volumenreflexionshologramm der Mattscheibe 1 ausbildet. Das Volumenreflexionshologramm der Mattscheibe wird mit dem Bezugszeichen H2 gekennzeichnet.

Um individualisierte Volumenreflexionshologramme herzustellen, ist gemäß Fig. 1c das Volumenreflexionshologramm H2 der Mattscheibe 1 auf einem Träger 20 aufgebracht. Der Träger 20 und das darauf angebrachte Volumenreflexionshologramm H2, welches eine Diffusbeugungsstruktur 21 darstellt, bilden gemeinsam einen Master. Vor diesem wird ein holografischer Film 25 angeordnet. Anschließend wird räumlich moduliertes kohärentes Laserlicht 26 unter einem spitzen Winkel relativ zu einer Oberflächennormale 27 des holografischen Films 25 eingestrahlt, welches sich mit dem an dem Volumentransmissionshologramm H1 der Mattscheibe 1 reflektierend gebeugten Licht in dem holografischen Film 25 überlagert und dort ein aufgrund der räumlichen Modulation individualisiertes Volumenreflexionshologramm 28 ausbildet. Abweichend von der Darstellung der Fig. 1c kann die Belichtung in diesem Fall auch kollinear mit der Oberflächennormale 27 erfolgen. Ursächlich hierfür ist, dass die mittlere Austrittsrichtung der Mattscheibe 1 bei der Herstellung des Hologramms H1 mit der Oberflächennormale 8 des Aufzeichnungsmaterials 5 zusammenfällt.

Quasi als Bestandteil der Individualisierung wird auch die Form einer Passermarke in den holografischen Film 25 vorzugsweise in einem Randbereich des Hologramms 28 einbelichtet. Die Passermarke kann die Form einer Linie, eines Kreuzes, eines Winkel oder Ähnlichen aufweisen. Die im Zusammenhang mit Fig. 1a und 1b sowie 1c beschriebenen Vorgänge sind aus dem Stand der Technik bekannt.

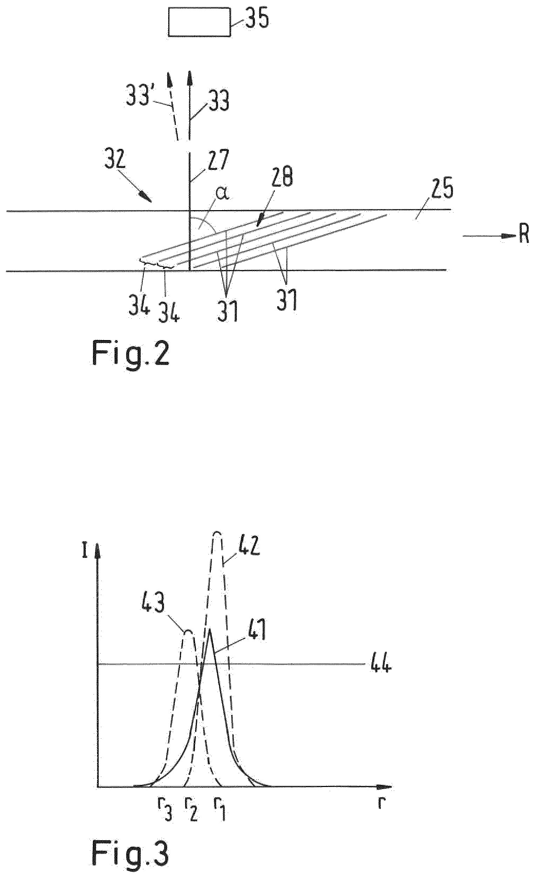

In Fig. 2 sind schematisch der holografische Film 25 sowie darin ausgebildete Interferenzstrukturebenen 31 dargestellt, die die holografisch gespeicherte Information umfassen. Die Interferenzstrukturebenen 31 weisen einen spitzen Winkel α relativ zu einer Oberflächennormale 27 des holografischen Films 25 auf. Ist das Volumenreflexionshologramm 28, welches durch die Interferenzebenen 31 repräsentiert wird, in der Weise ausgebildet, wie es in den Fig. 1a bis 1b beschrieben ist, so findet an diesen Interferenzebenen ähnlich zu der Braggreflexion eine beugende Reflexion von unter 45° zur Oberflächennormalen 27 einfallendem Rekonstruktionslicht 32 statt. Das gebeugt reflektierte Licht 33 wird parallel zur Oberflächennormale 27 zurückgestrahlt. Das reflektierend gebeugte Licht 33 wird jedoch nur senkrecht zur Oberfläche des holografischen Films 25 abgestrahlt, sofern die Interferenzbedingung für eine konstruktive Interferenz der an den unterschiedlichen Interferenzstrukturebenen 31 gebeugten Lichtanteile erfüllt ist. Ändert sich aufgrund der Schrumpfung des holografischen Films 25 bei der Entwicklung ein Abstand 34 der äquidistanten Interferenzstrukturebenen 31, so wird das Rekonstruktionslicht 32, welches als monochromatisch angenommen wird, aufgrund der Beugung an den unterschiedlichen Interferenzstrukturebenen 31 nicht mehr als gebeugter Lichtstrahl 33 sondern gebeugter Lichtstrahl 33' unter einer leicht veränderten Richtung beugend reflektiert. Dieses ist für eine Detektion der Passermarke in einem Produktionsprozess sehr nachteilig.

In dem weiteren Produktionsprozess wird das individualisierte Volumenreflexionshologramm 28 entlang einer Richtung r bewegt, die in der Ebene des Volumenreflexionshologramms bzw. des entwickelten holografischen Films 25 liegt. Dieses Volumenreflexionshologramm wird im Bereich der Passermarke mit Rekonstruktionslicht bestrahlt und das beugend reflektierte Licht 33 mit einem lichtempfindlichen Detektor 35, z.B. einer Fotodiode, erfasst.

In Fig. 3 sind unterschiedliche detektierte Intensitäten I aufgetragen gegen eine Position r des hergestellten Volumenreflexionshologramms schematisch dargestellt. Eine Intensitätskurve 41 gibt die erwartete Intensitätskurve des Lichts wieder, welches beim Passieren der Passermarke von einem lichtempfindlichen Detektor erfasst wird, der das gebeugte Rekonstruktionslicht 33, 33' erfasst. Die mit dem Bezugszeichen 43 gekennzeichnete und gestrichelt ausgeführte Signalkurve zeigt das gemessene Signal, dass sich ergibt, wenn beim Entwicklungsprozess aufgrund von unvermeidbaren Material- und Fertigungsschwankungen eine von der erwartenden Schrumpfung des holografischen Films 25 abweichende Schrumpfung im Entwicklungsprozess des holografischen Films 25 aufgetreten ist. Eine dritte gepunktet dargestellte Signalkurve 42 zeigt das Messergebnis des an der Passermarke beugend reflektierten Rekonstruktionslichts, bei dem der holografische Film 25 eine gesteigerte Beugungseffizienz gegenüber der erwarteten mittleren erzielten Beugungseffizienz aufweist. In das Diagramm der Fig. 3 ist ferner eine Schwellwertintensität 44 eingetragen. Diese Schwellwertintensität 44 wird verwendet, um zu entscheiden, ob die Passermarke, die sich mit dem holografischen Film 25 entlang der Richtung r bewegt, an der Position des lichtempfindlichen Detektors 35 angelangt ist oder nicht. Sobald das an dem lichtempfindlichen Detektor 35 gemessene Intensitätssignal, welches beispielsweise als Spannungssignal erfasst wird, die Schwellwertintensität 44 überschreitet, so gilt die Passermarke als erfasst. Wie aus Fig. 3 zu erkennen ist, kann sowohl eine Veränderung der Schrumpfung als auch eine Änderung der Beugungseffizienz, welche prozess- und/oder materialbedingt, wie oben erläutert ist, schwanken können, dazu führen, dass unterschiedliche Positionen r1, r2, r3, die mit den Messsignalen 41, 42, 43 entsprechend korrespondieren, als Position der Passermarke in dem Film aufgefasst werden: Eine präzise Positionierung des individualisierten Volumenreflexionshologramms relativ zu anderen Objekten ist somit in einem herzustellenden Sicherheitsdokument gemäß dem Stand der Technik nicht möglich. Eine Flankenform der Signalkurven 41 bis 43 im Bereich des Signalanstiegs ist darüber hinaus durch die diffuse Streueigenschaft der Mattscheibe 1 mitbedingt. Eine präzise Positionierung des individualisierten Volumenreflexionshologramms 28 relativ zu anderen Bestandteilen eines Sicherheitsdokuments ist somit bei einer Erfassung der Passermarke, wie beschrieben, nicht möglich. Um dies zu verbessern, wird der Master nach dem Stand der Technik entscheidend verbessert.

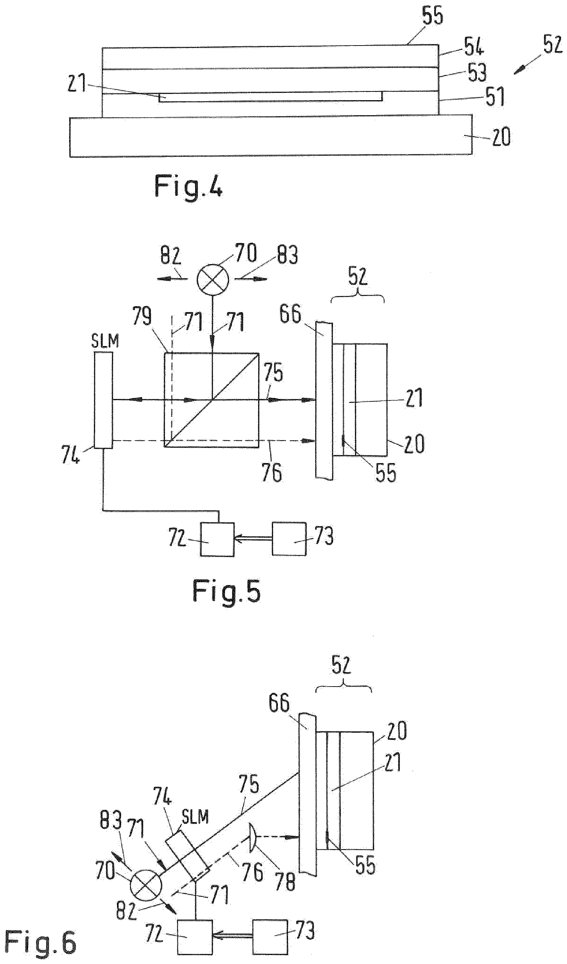

In Fig. 4 ist eine Schnittansicht durch einen verbesserten Master 52 dargestellt. Gleiche technische Merkmale sind mit denselben Bezugszeichen wie bei dem Master aus dem Stand der Technik gekennzeichnet. Der Master umfasst einen Träger 20, welcher beispielsweise aus einem Quarzglas hergestellt ist. Auf diesem ist eine Schicht 51 mit einer Diffusbeugungsstruktur 21 angeordnet. Dfese ist beispielsweise als Volumenreflexionshologramm ausgebildet, wie dies oben im Zusammenhang mit den Fig. 1a und 1b erläutert ist. Bei der dargestellten Ausführungsform umfasst der Master 52 zusätzliche, in weiteren Schichten 53,54 ausgebildete Beugungsstrukturen, welche beispielsweise ein dreidimensionales Volumenreflexionshologramm eines Logos oder eine metallisch verspiegelte Oberflächenbeugungsstruktur umfassen können, welche berechnet und mittels eines Elektronenstrahlverfahrens in eine Oberfläche eingeprägt ist. Eine solche Schicht, die eine vorzugsweise asymmetrische, errechnete Oberflächenbeugungsstruktur umfasst, welche verspiegelt ist, ist in der Regel nicht unmittelbar mittels eines Elektronenstrahlverfahrens in die aufgebrachte Schicht 53, 54 eingeprägt- Vielmehr wird meist eine Einprägung einer solchen Struktur in einen Kristallkörper vorgenommen und von diesem ein Negativ abgeformt, beispielsweise mittels eines UV-aushärtbaren Lacks. Die eigentliche in den Master integrierte Schicht 53, 54 wird von dieser Negativstruktur, beispielsweise in Form eines UV-aushärtbaren Lacks als Positivstruktur abgeformt und anschließend verspiegelt.

Die unterschiedliche Beugungsstrukturen aufweisende Schichten 51, 53, 54 sind auf dem Träger 20 übereinander geschichtet angeordnet. Abschließend ist auf die oberste Schicht 54 ein Reflexionselement 55 in Form einer metallischen Bedampfung aufgebracht. Diese wird so ausgeführt, dass sich eine metallisch spiegelnde Oberflächenstruktur ergibt. Es versteht sich, dass Ausführungsformen herstellbar sind, welche mehrere solcher Reflexionselemente 55 umfassen, die an unterschiedlichen Positionen auf dem Master 52 ausgebildet sind, um an unterschiedlichen Stellen später Passermarken in ein mittels des Masters 52 hergestelltes individualisiertes Volumenreflexionshologramm belichten zu können.

In Fig. 5 ist schematisch eine Vorrichtung zum Herstellen eines verbesserten individualisierten Volumenreflexionshologramms dargestellt. Vor dem Master 52, der beispielsweise so ausgebildet ist wie der Master, der im Zusammenhang mit Fig. 4 beschrieben ist, wird ein holografischer Film 66 angeordnet. Dieser ist vorzugsweise planparallel anliegend an den Master 52 angeordnet. Mittels einer Lichtquelle 70, vorzugsweise eines Lasers, wird kohärentes Licht 71 erzeugt. Von einem Computer 72 werden Individualisierungsinformationen 73 empfangen. Der Computer 72 steuert anhand der empfangenen Individualisierungsinformationen 73 einen räumlichen Lichtmodulator (SLM - Special Light Modulator) 74.

Bei der dargestellten Ausführungsform ist der räumliche Lichtmodulator 74 beispielsweise als sogenannter LCoS-Modulator ausgebildet, wobei LCoS für Liquid Crystal on Silicon steht. Das Licht der Lichtquelle 71 ist polarisiert und wird über einen polarisationsabhängigen Strahlteilerwürfel 79 auf den räumlichen Lichtmodulator 74 geführt. Dieser verändert bei der Modulation die Polarisationsrichtung des Lichts und reflektiert dieses. Der räumliche Lichtmodulator 74 modullert somit einen Teil 75 des Laserlichts 71 gemäß der empfangenen Individualisierungsinformationen 73, so dass gemäß den Individualisierungsinformationen 73 moduliertes Licht 75 zurückreflektiert wird. Ein anderer Teil 76 des Laserlichts 71 wird räumlich so moduliert, dass diesem die Form einer Passermarke aufmoduliert ist. Aus dem räumlichen Lichtmodulator 74 tritt somit ein Teil 76 des Laserlichts 71 aus, dem die Passermarkenform räumlich aufmoduliert ist. Die Teile 75, 76 des räumlich modulierten Lichts werden nun durch den holografischen Film 66 auf den Master 52 geführt. Hierbei können bei der dargestellten Ausführungsform die Anteile des modulierten Lichts 75, 76 deren Polarisationsrichtung um 90° gedreht ist, den Strahlteilerwürfel 79 passieren.

Der Teil 75 des Laserlichts, der räumlich gemäß der Individualisierungsinformationen 73 moduliert ist, wird an der Diffusbeugungsstruktur 21 reflektierend gebeugt, so dass sich in dem holografischen Film 66 ein individualisiertes Volumenreflexionshologramm der Mattscheibe 1 ausbildet. Der räumlich modulierte Teil 76 des Laserlichts, dem die Passermarkenform aufmoduliert ist, wird auf das Reflexionselement 55 geführt. Dieses Licht wird mit nahezu 100 % reflektiert. Da an dem Reflexionselement 55 keine Winkelstreuung wie an der Beugungsstruktur, welche hier die Diffusbeugungsstruktur 21 der Mattscheibe ist, stattfindet, kann eine Flankensteilheit des bei der Detektion des Rekonstruktionslichts erfassten Messsignals gesteigert werden, was zu einer Eingrenzung der Positionsschwankung bei der Erfassung der Passermarke im weiteren Verarbeitungsprozess führt.

Bei der schematischen Darstellung wird angenommen, das das Licht 71 der Lichtquelle aufgeweitet ist, um eine vollflächige zeitgleiche Belichtung des holografischen Films 66 auszuführen oder, wie über die Pfeile 82, 83 angedeutet ist,
abtastend über den räumlichen Lichtmodulator 74 und den Film 66 geführt wird.

In Fig. 6 ist schematisch eine weitere Vorrichtung zum Herstellen eines verbesserten individualisierten Volumenreflexionshologramms dargestellt. Gleiche technische Merkmale sind in Fig. 6 mit denselben Bezugszeichen wie in Fig. 5 versehen. Bei dieser Ausführungsform ist der räumliche Lichtmodulator 74 beispielsweise als LCD-Schirm ausgebildet, der von dem kohärenten und polarisierten Licht 71 durchstrahlt wird. Abhängig von einem Schaltzustand der einzelnen Flüssigkristallzellen des LCD-Schirms kann das Licht den LCD-Schirm passieren oder wird ganz oder teilweise abgeblockt. Bei dieser Ausführungsform wird der Anteil des gemäß den Individualisierungsinformationen 73 modulierten Licht 75 unter einem Winkel gegenüber einer Oberflächennormale des Masters 52 bzw. des Trägers 20 durch den holografischen Film 66 auf den Master 52 geführt. Dieses erfolgt beispielsweise, wenn die vorgegebene Einfallsrichtung und vorgegebene Ausfallsrichtung für die rekonstruierende Beugung der Diffusbeugungsstruktur 21 oder einer anderen Beugungsstruktur beide von der Lotrechten der Oberfläche des Masters 52 und des Trägers 20 abweichen.

Dennoch wird über eine Ablenkungsoptik 78 der Teil 76 des Laserlichts 71, dem die Form der Passermarke räumlich aufmoduliert ist, so geführt, dass dieses senkrecht durch den holografischen Film 66 geführt ist und senkrecht auf das Reflexionselement 55 auftrifft. Hierdurch werden Interferenzstrukturen geschaffen, deren Interferenzebenen parallel zur Oberfläche des Filmmaterials ausgebildet sind. Bei einer Rekonstruktion führen unterschiedliche Schrumpfungsgrade nicht mehr zu einer Änderung des Beugungswinkels sondern lediglich zu einer Änderung der Wellenlänge, bei der eine Beugung auftritt. Wird jedoch für die Rekonstruktion relativ breitbandiges Licht verwendet, so spielt eine solche Wellenlängenverschiebung praktisch keine Rolle bei der Detektion der Passermarke mehr.

Im dargestellten Beispiel ist die Strahlführung so angedeutet, dass das Licht den Lichtmodulator 74 passiert. Dieses ist beispielsweise bei einer Ausführung als Flüssigkristallschirm (LCD) der Fall. Es kann jedoch auch bei einer solchen Ausführungsform ein LCoS-Lichtmodulator (LCoS - Liquid Crystal on Silicon) verwendet werden, an dem das Licht reflektiert wird. Die Strahlführung ist entsprechend anzupassen und um einen Strahlteiler zu erweitern, wie dieses dem Fachmann aus dem Stand der Technik bekannt ist und dieses im Zusammenhang mit Fig. 5 beschrieben ist.

Es versteht sich für den Fachmann, dass lediglich beispielhafte Ausführungsformen der Erfindung beschrieben sind. Auch wenn in der Figurenbeschreibung Ausführungsformen mit Beugungsstrukturen als Ablenkungsstrukturen beschrieben sind, können selbstverständlich auch nicht beugende Ablenkungsstrukturen, die beispielsweise spiegelnde Fassettenflächen aufweisen, bei anderen Ausführungsformen verwendet werden.

### Bezugszeichenliste

- 1: Mattscheibe
- 2: Linsen
- 3: Objektstrahl
- 4: aufgeweitetes Licht
- 5: holografisches Aufzeichnungsmaterial
- 6: Referenzstrahl
- H1: (Volumen-)Transmissionshologramm
- 7: Rekonstruktionslicht
- 8: Oberflächennormale
- 9: weiteres holografisches Aufzeichnungsmaterial
- 10: Oberflächennormale
- H2: Volumenreflexionshologramm
- 11: Referenzlicht
- 20: Träger
- 21: Diffusbeugungsstruktur
- 25: holografischer Film
- 26: räumlich moduliertes Laserlicht
- 27: Oberflächennormale
- 28: individualisiertes Volumenreflexionshologramm
- 31: lntenerenzstrukturebenen
- 32: Rekonstruktionslicht
- 33,: 33' gebeugtes Rekonstruktionslicht
- 34: Abstand
- r: Richtung
- 35: lichtempfindlicher Detektor
- I: Intensität
- 41-43: Signalkurven
- 44: Schwellwerlintensität
- 51: Schicht mit der Diffusbeugungsstruktur
- 52: Master
- 53: Schicht mit Beugungsstruktur
- 54: Schicht mit Beugungsstruktur
- 55: Reflexionselement
- 66: holografischer Film
- 70: Lichtquelle
- 71: Laserlicht
- 72: Computer
- 73: Individualisierungsinformation
- 74: räumlicher Lichtmodulator
- 75: Lichtanteil, der gemäß der Individualisierungsinformationen räumlich moduliert ist
- 76: Lichtanteil, dem die Form der Passermarke räumlich aufmoduliert ist
- 78: Ablenkungsoptik
- 79: Strahlteilerwürfel

## Patentansprüche

1. Verfahren zum Herstellen eines individualisierten Volumenhologramms umfassend die Schritte:
Bereitstellen oder Herstellen eines Masters (52), der einen Träger (20),
mindestens eine Ablenkungsstruktur (21), welche auf dem Träger angeordnet ist oder in diesem ausgebildet ist und einen Nutzbereich bedeckt, wobei die mindestens eine Ablenkungsstruktur (21) kohärentes Licht einer Wellenlänge, das aus einer vorgegebenen Einfallsrichtung auf die Ablenkungsstruktur (21) auftrifft in eine zur Einfallsrichtung nicht kollineare vorgegebene Ausfallrichtung zurückstrahlt,
wobei in einer Rückstrahlebene, welche von der Einfallsrichtung und der Ausfallrichtung aufgespannt wird, der Winkel der Einfallsrichtung zu der Oberflächennormale der makroskopischen Oberfläche des Masters lokal an einem Auftreffort des kohärenten Lichts von dem Winkel der Ausfallrichtung gegen diese Oberflächennormale abweicht,
sowie ein Reflexionselement (55) umfasst, das gerichtetes Licht gemäß der geometrischen Optik spiegelnd reflektiert;
Bereitstellen eines holografischen Films (66) und
Anordnen des Films (66) vor dem Master (52),
Erzeugen von kohärentem Licht (71) der einen Wellenlänge;
und Richten des kohärenten Lichts durch den holografischen Film (66), so dass mindestens ein Teil (75) des kohärenten Lichts (71) an der Ablenkungsstruktur (21) in den holografischen Film zurückstrahlt,
wobei einem weiteren Teil (76) des Lichts (71) die Form einer Passermarke aufmoduliert wird und dieser weitere Teil (76) des Lichts (71), dem die Passermarkenstruktur räumlich aufmoduliert ist, durch den holografischen Film so auf den Master (52) gelenkt wird, dass dieser weitere Teil (76) von dem gemäß der geometrischen Optik spiegelnd reflektierenden Reflexionselement reflektiert wird,
wobei unabhängig von der vorgegebenen Einfallsrichtung, in der der eine Teil des Lichts zum Kopieren der Ablenkungsstruktur eingestrahlt wird, der weitere Teil (76) des Lichts (71), dem eine Form der Passermarke aufmoduliert ist, senkrecht durch den holografischen Film (66) und senkrecht auf das Reflexionselement (55) geführt wird, und wobei das Verfahren zusätzlich die Schritte umfasst: Empfangen von Individualisierungsdaten (73); und Modulieren des kohärenten Lichts (71) entsprechend der Individualisierungsdaten (73) mittels eines räumlichen Lichtmodulators (74), um den Nutzbereich oder einen Teil hiervon individualisiert zu kopieren, wobei das Modulieren des kohärenten Lichts (71) mittels des räumlichen Lichtmodulators (74) den einen Teil (75) und den weiteren Teil (76) des kohärenten Lichts erzeugt und wobei der räumliche Lichtmodulator (74) dem weiteren Teil (76) des kohärenten Lichts die Form der Passermarke aufmoduliert.

2. Verfahren nach einem der Ansprüche 1, **dadurch gekennzeichnet, dass** der Film beim Anordnen zumindest lokal parallel zu einer makroskopischen Oberfläche des Masters ausgerichtet wird.

3. Verfahren nach einem der Ansprüche 1 bis 2, **dadurch gekennzeichnet, dass** das Herstellen eines Masters die Schritte umfasst:
Bereitstellen des Trägers (20);
Herstellen oder Bereitstellen der mindestens einen Ablenkungsstruktur (21);
Aufbringen der Ablenkungsstruktur (21) auf den Träger (20) und Aufbringen des Reflexionselements (55).

4. Verfahren nach Anspruch 3, **dadurch gekennzeichnet, dass** der Master so bereitgestellt oder hergestellt wird, dass das Reflexionselement als Metallschicht auf den Träger (20) oder eine oberste auf den Träger (20) aufgebrachte Schicht (54) aufgedampft wird.

5. Verfahren nach einem der Ansprüche 1 bis 4, **dadurch gekennzeichnet, dass** die Ablenkungsstruktur als eine Diffusbeugungsstruktur (21) bereitgestellt oder hergestellt wird, die als Volumenreflexionshologramm (H2) einer Mattscheibe (1) in einer Schicht (51) ausgebildet ist.

6. Verfahren nach einem der Ansprüche 1 bis 5, **dadurch gekennzeichnet, dass** der Master so bereitgestellt oder hergestellt wird, dass eine oder mehrere weitere Ablenkungsstrukturen auf dem Träger (20) angeordnet oder in dem Träger ausgebildet sind.

7. Verfahren nach einem der Ansprüche 1 bis 6, **dadurch gekennzeichnet, dass** die mindestens eine Ablenkungsstruktur oder eine oder mehrere weitere Ablenkungsstrukturen mikroskopische reflektierende Flächen mit Abmessungen größer als die Wellenlänge des zur späteren Herstellung des individualisierten Volumenhologramms genutzten Lichts umfasst, deren Oberflächennormalen im Bereich eines bestimmten Winkels alle kollinear sind und gegenüber einer Oberflächennormale der makroskopischen Oberfläche des Masters geneigt sind.

8. Verfahren nach Anspruch 6 oder 7, **dadurch gekennzeichnet, dass** der Master so bereitgestellt oder hergestellt wird, dass die eine oder die mehreren weiteren Ablenkungsstrukturen in unterschiedlichen Schichten (53, 54) ausgebildet sind, die übereinander auf dem Träger (20) angeordnet sind.

9. Verfahren nach einem der vorangehenden Ansprüche, **dadurch gekennzeichnet, dass** der Master so bereitgestellt oder hergestellt wird, dass das Reflexionselement (55) parallel zur makroskopischen Oberfläche des Masters (52) ausgerichtet ist.

## Claims

1. Method for producing a customised volume reflection hologram, comprising the steps of:
providing or producing a master (52), which comprises a carrier (20), at least one deflection structure (21), which is arranged on the carrier or is formed in the carrier, and covers a utility region, wherein the at least one deflection structure (21) reflects coherent light of a wavelength incident onto the deflection structure (21) from a specified incidence direction back into a specified drop-out direction which is not collinear to the incidence direction, wherein, in a back-reflection plane which is spanned by the incidence direction and the drop-out direction, the angle of the incidence direction to the surface normal of the macroscopic surface of the master deviates locally at an incident location of the coherent light from the angle of the drop-out direction against this surface normal,
and comprises a reflection element (55), which reflects the directed light in accordance with the geometric optics;
provision of a holographic film (66) and
arrangement of the film (66) in front of the master (52),
production of coherent light (71) of the one wavelength;
and directing of coherent light through the holographic film (66), such that at least a part (75) of the coherent light (71) radiates back at the deflection structure (21) into the holographic film,
wherein the shape of a register mark is modulated onto a further part (76) of the light (71), and wherein this further part (76) of the light (71) onto which the register mark structure is spatially modulated is guided through the holographic film onto the master (52) in such a way that this further part (76) is reflected by the reflection element, reflecting in a mirroring manner in accordance with the geometric optics, wherein, independently of the specified incidence direction in which the one part of the light is radiated for the copying of the deflection structure, the further part (76) of the light (71) on which the shape of the register mark is modulated is guided perpendicularly through the holographic film (66) and perpendicularly onto the reflection element (55), and wherein the method additionally comprises:
receiving of customising data (73); and modulating of the coherent light (71) in accordance with the customising data (73) by means of a spatial light modulator (74) in order to copy the utility area or a part thereof in a customised manner, wherein the modulating of the coherent light (71) by means of the spatial light modulator (74) produces the one part (75) and the further part (76) of the coherent light, and wherein the spatial light modulator (74) modulates the shape of the register mark on the further part (76) of the coherent light.

2. Method according to claim 1, **characterised in that**, when being arranged, the film is aligned at least locally parallel to a macroscopic surface of the master.

3. Method according to any of claims 1 or 2, **characterised in that** the production of a master comprises the steps of:
providing the carrier (20);
producing or providing the at least one deflection structure (21);
application of the deflection structure (21) onto the carrier (20) and application of the reflection element (55).

4. Method according to claim 3, **characterised in that** the master is provided or produced in such a way that the reflection element is vapour-deposited as a metal layer onto the carrier (20) or onto a topmost layer (54) applied onto the carrier (20).

5. Method according to any of claims 1 to 4, **characterised in that** the deflection structure is provided or produced as a diffuse diffraction structure (21), which is configured as a volume reflection hologram (H2) of a ground-glass (matt) disk (1) in a layer (51).

6. Method according to any of claims 1 to 5, **characterised in that** the master is provided or produced in such a way that one or more further deflection structures are arranged on the carrier (20) or formed in the carrier.

7. Method according to any of claims 1 to 6, **characterised in that** the at least one deflection structure or one or more further deflection structures comprise microscopically reflecting surfaces with dimensions greater than the wavelength of the light used for the later production of the customised volume hologram, of which the surface normals in the range of a specific angle are all collinear and are inclined in relation to a surface normal of the macroscopic surface of the master.

8. Method according to any of claims 6 or 7, **characterised in that** the master is provided or produced in such a way that the one or more deflection structures are formed in different layers (53, 54), which are arranged above one another on the carrier (20).

9. Method according to any one of the preceding claims, **characterised in that** the master is provided or produced in such a way that the reflection element (55) is aligned parallel to the macroscopic surface of the master (52).

## Revendications

1. Procédé de fabrication d'un hologramme volumique individualisé comprenant les étapes suivantes :
la mise à disposition ou la fabrication d'un gabarit (52) qui comporte un support (20), au moins une structure de déviation (21), qui est agencée sur le support ou est réalisée dans celui-ci, et recouvre une zone utile, dans lequel l'au moins une structure de déviation (21) renvoie de la lumière cohérente d'une longueur d'onde qui frappe depuis un sens d'incidence prédéterminé la structure de déviation (21) dans un sens d'émergence prédéterminé non colinéaire au sens d'incidence, dans lequel dans un plan de renvoi qui est défini par le sens d'incidence et le sens d'émergence, l'angle du sens d'incidence à la normale de surface de la surface macroscopique du gabarit diverge localement, au niveau d'un lieu de frappe de la lumière cohérente, de l'angle du sens d'émergence contre cette normale de surface,
ainsi qu'un élément de réflexion (55) qui réfléchit à la manière d'un miroir de la lumière dirigée selon l'optique géométrique ;
la mise à disposition d'un film holographique (66) et l'agencement du film (66) devant le gabarit (52),
la génération de lumière cohérente (71) de l'une longueur d'onde ;
et la direction de la lumière cohérente à travers le film holographique (66) de sorte qu'au moins une partie (75) de la lumière cohérente (71) renvoie au niveau de la structure de déviation (21) dans le film holographique,
dans lequel la forme d'une marque de repérage est modulée sur une autre partie (76) de la lumière (71) et cette autre partie (76) de la lumière (71), sur laquelle la structure de marque de repérage est modulée spatialement, est dirigée à travers le film holographique sur le gabarit (52) de sorte que cette autre partie (76) soit réfléchie par l'élément de réflexion réfléchissant à la manière d'un miroir selon l'optique géométrique, dans lequel indépendamment du sens d'incidence prédéterminé,
dans lequel l'une partie de la lumière est projetée pour la copie de la structure de déviation, l'autre partie (76) de la lumière (71), sur laquelle une forme de la marque de repérage est modulée, est guidée perpendiculairement à travers le film holographique (66) et perpendiculairement sur l'élément de réflexion (55), et dans lequel le procédé comporte en outre les étapes suivantes : la réception de données d'individualisation (73) ; et la modulation de la lumière cohérente (71) selon les données d'individualisation (73) au moyen d'un modulateur de lumière spatial (74) afin de copier de manière individualisée la zone utile ou une partie de celle-ci,
dans lequel la modulation de la lumière cohérente (71) génère au moyen du modulateur de lumière spatial (74) l'une partie (75) et l'autre partie (76) de la lumière cohérente et dans lequel le modulateur de lumière spatial (74) module sur l'autre partie (76) de la lumière cohérente la forme de la marque de repérage.

2. Procédé selon l'une des revendications 1, **caractérisé en ce que** le film est orienté lors de l'agencement au moins localement parallèlement à une surface macroscopique du gabarit.

3. Procédé selon l'une des revendications 1 à 2, **caractérisé en ce que** la fabrication d'un gabarit comporte les étapes suivantes :
la mise à disposition du support (20) ;
la fabrication ou la mise à disposition de l'au moins une structure de déviation (21) ;
l'application de la structure de déviation (21) sur le support (20) et l'application de l'élément de réflexion (55).

4. Procédé selon la revendication 3, **caractérisé en ce que** le gabarit est mis à disposition ou fabriqué de sorte que l'élément de réflexion soit évaporé en tant que couche métallique sur le support (20) ou une couche (54) la plus haute appliquée sur le support (20).

5. Procédé selon l'une des revendications 1 à 4, **caractérisé en ce que** la structure de déviation est mise à disposition ou fabriquée en tant que structure de diffraction diffuse (21) qui est en tant qu'hologramme de réflexion volumique (H2) d'un verre dépoli (1) dans une couche (51).

6. Procédé selon l'une des revendications 1 à 5, **caractérisé en ce que** le gabarit est mis à disposition ou fabriqué de sorte qu'une ou plusieurs autres structures de déviation soient agencées sur le support (20) ou soient réalisées dans le support.

7. Procédé selon l'une des revendications 1 à 6, **caractérisé en ce que** l'au moins une structure de déviation ou une ou plusieurs autres structures de déviation comporte des surfaces réfléchissantes microscopiques avec des dimensions supérieures à la longueur d'ondes de la lumière utilisée pour la fabrication ultérieure de l'hologramme volumique individualisé, dont les normales de surface sont toutes colinéaires dans la zone d'un angle déterminé et sont inclinées par rapport à une normale de surface de la surface macroscopique du gabarit.

8. Procédé selon la revendication 6 ou 7, **caractérisé en ce que** le gabarit est mis à disposition ou fabriqué de sorte que l'une ou les plusieurs autres structures de déviation soient réalisées dans différentes couches (53, 54) qui sont agencées l'une au-dessus de l'autre sur le support (20).

9. Procédé selon l'une des revendications précédentes, **caractérisé en ce que** le gabarit est mis à disposition ou fabriqué de sorte que l'élément de réflexion (55) soit orienté parallèlement à la surface macroscopique du gabarit (52).
